# EUROPÄISCHE PATENTSCHRIFT

(11) **EP 2 911 876 B1**
(45) Veröffentlichungstag und Bekanntmachung des Hinweises auf die Patenterteilung: **29.06.2016**
(21) Anmeldenummer: 13789705.4
(22) Anmeldetag: 28.10.2013
(51) Int. Cl.: B32B 18/00, C04B 37/02

(54) **KERAMIKBAUTEIL MIT EINEM CERMET-KÖRPER**
CERAMIC COMPONENT WITH A CERMET BODY
ÉLÉMENT CÉRAMIQUE POURVU D'UN CORPS EN CERMET

(30) Priorität: 29.10.2012 DE 102012021296; 13.11.2012 DE 102012022263
(43) Veröffentlichungstag der Anmeldung: 02.09.2015
(73) Patentinhaber: Friatec Aktiengesellschaft, 68229 Mannheim (DE)
(72) Erfinder: MAYER, Helmut, 69168 Wiesloch (DE); BITZ, Günther, 68229 Mannheim (DE)
(74) Vertreter: Schmitt, Meinrad
(86) Internationale Anmeldenummer: PCT/EP2013/003238
(87) Internationale Veröffentlichungsnummer: WO 2014/067644

(56) Entgegenhaltungen:
- EP-A1- 0 433 261
- EP-A1- 1 619 480
- EP-A2- 0 386 941
- JP-A- 2009 110 769
- US-A- 4 704 557

## Beschreibung

Die Erfindung bezieht sich auf ein Keramikbauteil gemäß den im Oberbegriff des Patentanspruchs 1 angegebenen Merkmalen. Ferner bezieht sich die Erfindung auf ein Verfahren zur Herstellung eines solchen Keramikbauteils.

Aus der EP 0 433 261 A1 ist ein derartiges Keramikbauteil bekannt, dessen zylindrische Außenfläche vom Keramikkörper umgeben ist, wobei der Cermet-Körper, welcher das Keramikbauteil von einer Oberfläche bis zur anderen Oberfläche durchdringt, mit einem ersten freien Bereich an der einen Oberfläche und mit einem anderen freien Bereich an der zweiten Oberfläche des Keramikbauteils endet. Gemäß einem anderen Ausführungsbeispiel ist ein elektrischer Leiter in eine Bohrung des Keramikbauteils eingesetzt und in diesem mit dem Cermet-Körper verbunden, wobei aber der andere freie Bereich wiederum der Bestandteile zur Bildung der Elektrode aufweist und somit der Cermet-Körper nicht vollständig von der Keramik des Keramik-Bauteils umgeben ist.

Ferner ist aus der JP 2009 110769 A eine Hochdruck-Entladungslampe mit einem elektrischen Leiter bekannt, welcher einen Cermet-Teil und einen mit diesem durch Schweißen verbundenen Teil aufweist. Der Cermet-Teil ist mittels eines Dichtteils in einem Gehäuse festgelegt und mit seinem freien Ende herausgeführt.

Weiterhin ist aus der EP 0 386 941 A2 eine Zündkerze mit Cermet-Elektroden bekannt. Die Cermet-Elektroden der Zündkerze enden frei außerhalb der Spitze eines Keramikkörpers.

Des Weiteren ist aus der US 4,704,557 A ein Cermet-Insert für eine Hochspannungsdurchführung bekannt, wobei das Cermet-Insert in einem Keramikkörper angeordnet und von diesem umgeben ist. Eine insbesondere als Scheibe ausgebildete Metall-Elektrode ist von einer Seite bis zur andere Seite eines Keramikkörpers durchgehend ausgebildet, wobei das Cermet-Insert nicht in der Mitte zwischen den beabstandet zueinander vorhandenen Oberflächen in einer Ebene angeordnet ist.

Weiterhin ist aus der EP 0 987 233 B1 ein Keramikbauteil sowie dessen Herstellungsverfahren bekannt. Der Cermet-Körper besteht beispielsweise aus Platin und Keramik und ist insbesondere als eine Elektrode ausgebildet. Der Cermet-Körper wird zunächst als Grünling hergestellt und in die Keramikmasse eingebracht. Nachfolgend wird das Keramikbauteil gemeinsam mit dem als Grünling vorliegenden Cermet-Körper verdichtet, und schließlich wird die Sinterung durchgeführt. Der Cermet-Körper durchdringt das Keramikteil vollständig von dessen erster Oberfläche bis zu dessen gegenüberliegenden zweiten Oberfläche. Ist das Keramikbauteil beispielsweise als Rohr ausgebildet, so erstreckt sich der Cermet-Körper von der Innenfläche durchgehend bis zur Außenfläche des rohrförmigen Keramikbauteils, wobei der Cermet-Körper insgesamt eine einteilige Cermet-Elektrode bildet, beispielsweise eines Messrohres für ein magnetisch-induktives Durchflussmessgerät. Ein derartiges Keramikbauteil hat sich seit Jahren für unterschiedliche Anwendungen und Einsatzbedingungen gut bewährt, doch besteht heute aufgrund erhöhter Anforderungen, wie insbesondere elektrische Durchschlagsfestigkeit, Hochvakuumdichte und Druckbeständigkeit ein nicht unerheblicher Bedarf an verbesserten Lösungen. Auch kann nicht außer Acht gelassen werden, dass das bekannte Keramikbauteil einen nicht unerheblichen Einsatz des Materials für den Cermet-Körper erfordert, zumal der Cermet-Körper ein beträchtliches Volumen aufweist und der Materialaufwand und / oder die Kosten für den Cermet-Körper recht hoch sind.

In der DE 195 45 590 C2 ist ein kogesintertes Schichtsystem beschrieben, welches einen Keramikkörper, eine Cermetschicht und eine auf dieser befindliche Abdeckschicht aus einem keramischen Material enthält. Die Cermetschicht ist mit dem Keramikkörper über ein Glas oder Glasgemisch verankert. Bei Ausbildung als ein Sensorelement weist der Keramikkörper die Form eines einseitig geschlossenen Rohres auf, welches im Inneren eine Referenzleiterbahn enthält, wobei an einer Innenseite des geschlossenen Rohrendes eine Referenzelektrode und am offenen Rohrende ein Elektrodenanschluss vorgesehen sind. An einer äußeren Rohroberfläche ist eine als Schicht ausgebildete Cermet-Leiterbahn mit einer Messelektrode angeordnet. Die Cermet-Leiterbahn ist mindestens teilweise mittels einer Deckschicht mindestens teilweise bedeckt. Elektrische Leiter, welche im Inneren des Keramikkörpers mit einem Cermet-Körper verbunden sind, sind nicht vorhanden.

Aus der DE 37 04 410 A1 ist ein Keramikkörper mit einem eingesetzten Stab bekannt. Zur Herstellung wird in ein Loch des noch nicht gesinterten Keramikkörpers ein Stab eingefügt. Die Innenfläche des Loches einerseits und die zugeordnete Außenfläche des Stabes andererseits sind derart aufeinander abgestimmt, dass bei der Sinterung der Keramikkörper in eine enge Berührung mit dem Stab gebracht wird, wobei die Schrumpfung des Keramikkörpers ausgenutzt wird. Der Keramikkörper enthält im Inneren des Loches einen Vorsprung, und aufgrund eines unterschiedlichen Wärmeausdehnungskoeffizienten des Keramikkörpers und des Stabes bedingten Schrumpfungsunterschiedes ist nach dem Abkühlen der Stab im Keramikkörper festgeklemmt, wobei der Stab das genannte Loch verschließt und im Keramikkörper fixiert ist.

Ferner ist aus der WO 2007/045113 A1 ein Verbund eines eine Cermet-Schicht enthaltenden Dünnfilms und eines glaskeramischen Substrats eines miniaturisierten elektrochemischen Gerätes bekannt. Dieses Verbundelement enthält wenigstens einen Dünnfilm aus mindestens zwei verschiedenen Schichten eines oxid-keramischen oder eines oxid-keramischen und metallischen oder eines metallischen Materials zur Bildung einer Feststoff-Brennzelle sowie das den Dünnfilm abstützenden, im Wesentlichen flächig ausgebildetes Substrat, welches aus einem keramisierbaren Glas, einer Glaskeramik, einer Mischform oder einem Zwischenzustand der beiden besteht. Das Substrat enthält durch ein Ätzverfahren erzeugte Löcher, durch welche flache elektische Leiterbahnen herausgeführt sind, wobei die Leiterbahnen vom Substrat nicht umschlossen werden. Des Weiteren sind an freien Oberflächen der Cermet-Schicht elektrische Leiter angeordnet.

Hiervon ausgehend liegt der Erfindung die Aufgabe zugrunde, das Keramikbauteil mit einem geringen konstruktiven Aufwand dahingehend weiterzubilden, dass die technischen Eigenschaften verbessert werden und / oder eine erhöhte mechanische und / oder zuverlässige Gestaltung erreicht wird. Das Keramikbauteil soll eine verbesserte Zuverlässigkeit aufweisen und insbesondere hinsichtlich der Druckbelastung beispielsweise mit 2000 bar funktionssicher und / oder mit vernachlässigbarem geringem technischen Risiko standhalten. Das Verfahren zur Herstellung soll in einfacher Weise durchführbar sein und insbesondere eine minimale und / oder vernachlässigbare Ausschussquote zur Folge haben.

Die Lösung dieser Aufgabe erfolgt gemäß den im Patentanspruch 1 angegebenen Merkmalen. Hinsichtlich des Verfahrens erfolgt die Lösung gemäß den Merkmalen des auf das Verfahren gerichteten Patentanspruchs.

Das erfindungsgemäße Keramikbauteil zeichnet sich durch eine einfache und funktionssichere Konstruktion aus und umgibt den vollständig im Inneren eingebetteten Cermet-Körper, welcher allseitig von der Keramik des Keramikbauteils umschlossen ist. Der Cermet-Körper ist vollständig im Inneren des Keramikbauteils angeordnet und dort mit wenigstens einem elektrischen Leiter verbunden, welcher aus Metall besteht und durch das Keramikbauteil und dessen eine Oberfläche nach außen geführt ist, wobei das Keramikbauteil den elektrischen Leiter von der Verbindungsstelle bis zur Oberfläche umschließt. Das Keramikbauteil ist einteilig ausgebildet und besteht einheitlich aus der gleichen Keramik. Ferner wird das Keramikbauteil aus der Keramikmasse gemeinsam mit dem wenigstens einen Cermet-Körper, welcher als Grünling in die Keramikmasse eingebracht und / oder eingesetzt wird, im gleichen Sinterverfahren hergestellt. Ist das Keramikbauteil als eine, insbesondere hochvakuumdichte, elektrische Durchführung ausgebildet, so sind mit dem Cermet-Körper zwei elektrische Leiter verbunden. Zur Verbindung des oder der metallischen elektrischen Leiter, welche insbesondere als Metallstifte ausgebildet sind, ist mit dem Cermet-Körper in besonders zweckmäßiger Weise ein elektrisch leitendes Mittel, insbesondere ein Klebemittel oder Lot, vorgesehen. Die bevorzugt als Stifte ausgebildeten elektrischen Leiter bestehen aus elektrisch leitfähigem Material, insbesondere Metall, aber nicht aus Cermet. Die Verbindungsstellen des jeweiligen Cermet-Körpers sind in einem vorgegebenen Abstand zueinander angeordnet, wobei zumindest in dem Bereich zwischen den Verbindungsstellen des Cermet-Körpers dieser vollständig von der Keramik des Keramikbauteils umschlossen ist. Beim Sintern des Keramikbauteils mit dem zunächst als Grünling vorliegenden Cermet-Körpers wird zumindest in dem Bereich zwischen den Verbindungsstellen ein druckfester, insbesondere mit Hochdruck belastbarer, und / oder ein dichter, insbesondere hochvakuumdichter Fügebereich des Cermet-Körpers mit der Keramik bzw. dem Keramikbauteil geschaffen. Das erfindungsgemäße Keramikbauteil enthält somit anstelle des vorbekannten Keramikbauteils gemäß der EP 0 987 233 B1 einen vergleichsweise kleinen im Inneren eingebetteten Cermet-Körper, welcher vor allem hinsichtlich des insbesondere aus Platin bestehenden Metallanteils erheblich einfacher und / oder mit geringerem Material- und / oder Kostenaufwand herstellbar ist. Gleichwohl wird aufgrund des zwischen den genannten Verbindungsstellen erfindungsgemäß vorhandenen Bereiches eine dauerhafte und / oder dichte, inbesondere hoch vakuumdichte, Verbindung der elektrischen Leiter erreicht. In bevorzugter Weise sind die Innenkontur und / oder die Innenflächen der Löcher, in welchen der jeweilige elektrische Leiter angeordnet ist, korrespondierend zur Außenkontur und / oder der Außenfläche des jeweiligen Leiters angeordnet, wobei die Innenflächen der Löcher im Wesentlichen dicht an den Außenflächen des jeweiligen Leiters anliegen. Somit wird insbesondere hinsichtlich der mechanischen Verbindung des oder der Leiter in den jeweiligen Löchern des Keramikbauteils eine funktionssichere und / oder dauerhafte Festlegung erreicht. Das Keramikbauteil mit dem komplett eingeschlossenen Cermet-Körper ist einteilig oder einstückig ausgebildet, wobei im Vergleich mit Bauteilen, welche verschiedene Schichten von Keramikwerkstoffen enthalten, keine besonderen oder zusätzlichen Maßnahmen zur Herstellung oder Verbindung verschiedener Schichten aus Keramik- oder Cermet-Bestandteilen erforderlich sind.

In einer besonderen Ausgestaltung der Erfindung enthält das Keramikbauteil wenigstens zwei im Inneren des Keramikbauteils mit dem Cermet-Körper verbundene elektrische Leiter, welche jeweils zu bevorzugt einander gegenüberliegenden Oberflächen des Keramikbauteils nach außen durchgeführt sind und sich über die jeweilige Oberfläche in bevorzugter Weise hinausgehend mit einem vorgegebenen Abstand erstrecken. In vorteilhafter Weise sind die beiden elektrischen Leiter, welche zweckmäßig im Wesentlichen achsparallel zueinander angeordnet sind, im Inneren des Keramikbauteils zumindest in den Verbindungsbereichen oder -stellen mit dem Cermet-Körper in einem vorgegebenen Abstand versetzt zueinander angeordnet. Der oder die Cermet-Körper sowie die Verbindungsstellen befinden sich innerhalb des Keramikkörpers, wobei erfindungsgemäß keine Flächen oder Bereiche des von Keramikbauteil komplett umgebenen Cermet-Körper zu einem Außenraum vorhanden sind. Der Cermet-Körper erstreckt sich in einem vorgegebenen Winkel, bevorzugt im Wesentlichen orthogonal, oder tangential zur Längsachse des Keramikbauteils und / oder den Achsen des oder der elektrischen Leiter. Des Weiteren können im Rahmen der Erfindung die Verbindungsstellen, bezogen auf die Längsachse des Keramikbauteils, axial oder achsparallel und / oder im vorgegebenen Winkel zur Längsachse angeordnet sein. Unabhängig von der Anordnung und / oder Ausrichtung der Verbindungsstellen eines Cermet-Körpers ist es erfindungsgemäß von besonderer Bedeutung, dass die Verbindungsstellen zueinander beabstandet angeordnet sind und / oder dass in dem Bereich zwischen den Verbindungsstellen die Keramik des Keramikbauteils den Cermet-Körper vollständig und / oder spaltfrei umgibt.

Das erfindungsgemäße Keramikbauteil gelangt bevorzugt für hohe Belastungen bezüglich Druck oder Überdruck und / oder hohe Temperaturen zur Verwendung. Insbesondere ist das Keramikbauteil als hochbelastbare Durchführung ausgebildet.

In einer besonderen Ausgestaltung sind der oder die elektrischen Leiter Bestandteile und / oder Kontaktelemente eines elektrischen Steckverbinders, insbesondere einer elektrischen Durchführung, und / oder das Keramikbauteils ist als bevorzugt elektrischer Isolierkörper ausgebildet. Hierbei sind der oder die an der einen Oberfläche vorstehenden oder aus dem Keramikbauteil herausragenden Leiterteile als Steckerstifte ausgebildet, mit welchen Kontaktbuchsen einer Steckerkupplung verbindbar sind. Alternativ können die genannten vorstehenden und / oder herausragenden Leiterteile als Kontaktbuchsen ausgebildet sein, mit welchen korrespondierende Steckerstifte einer Steckerkupplung verbindbar sind. Der Cermet-Körper weist ein geringes Bauvolumen auf und erfordert einen geringen Materialaufwand.

Die Herstellung des Keramikbauteils erfolgt in vorteilhafter Weise derart, dass die für das Keramikbauteil erforderliche Keramikmasse zunächst teilweise in ein entsprechendes Formgebungswerkzeug eingefüllt wird und dann der insbesondere als Grünling vorgefertigte Cermet-Körper in die teilweise eingefüllte Keramikmasse eingelegt wird. Nachfolgend wird die Keramikmasse gemeinsam mit dem Cermet-Körper verdichtet und schließlich die Sinterung durchgeführt. In einem weiteren Verfahrensschritt wird erfindungsgemäß eine Bohrung oder Öffnung bis zur vorgesehenen Verbindungsstelle in das Keramikbauteil eingebracht, ferner das elektrisch leitende Verbindungsmittel zugeführt und schließlich durch das Verbindungsmittel, insbesondere durch Aushärtung desselben, die Verbindung des Cermet-Körpers mit dem elektrischen Leiter hergestellt.

In einer alternativen besonderen Ausgestaltung kann der zweckmäßig als Grünling bereitgestellte Cermet-Körper zunächst mit dem oder den elektrischen Leitern verbunden und daraufhin im Formgebungswerkzeug von der Keramikmasse umgeben werden und schließlich kann im letzten Verfahrensschritt die Sinterung erfolgen. Hierbei bestehen der oder die elektrischen Leiter aus einem Werkstoff, welcher beim Sintern bzw. bei der erforderlichen Sintertemperatur möglichst nicht oder nur in einem geringen Maße oxidiert, oder aber die Sinterung erfolgt zweckmäßig unter Einsatz von Schutzgas zur Vermeidung der Oxidation, insbesondere der elektrischen Leiter. Weiterhin gelangt ein Verbindungsmittel zur Verwendung, welches der Sintertemperatur Stand hält und eine dauerhaft feste Verbindung des jeweiligen Cermet-Körpers mit den elektrischen Leitern sicherstellt.

Besondere Ausgestaltungen und Weiterbildungen der Erfindung sind in den Unteransprüchen sowie der weiteren Beschreibung angegeben.

Die Erfindung wird nachfolgend anhand eines besonderen Ausführungsbeispiels derart erläutert, ohne dass insoweit eine Beschränkung erfolgt. Es zeigen:
- Fig. 1: eine Aufsicht auf das als Steckereinsatz ausgebildete Keramikbauteil,
- Fig. 2: einen Schnitt entlang Schnittlinie A - A gemäß Fig. 1
- Fig. 3: einen Schnitt entlang Schnittlinie B - B gemäß Fig. 2,
- Fig. 4: einen Schnitt entlang Schnittlinie C - C gemäß Fig. 1,
- Fig. 5: eine perspektivische Darstellung des Keramikbauteils.

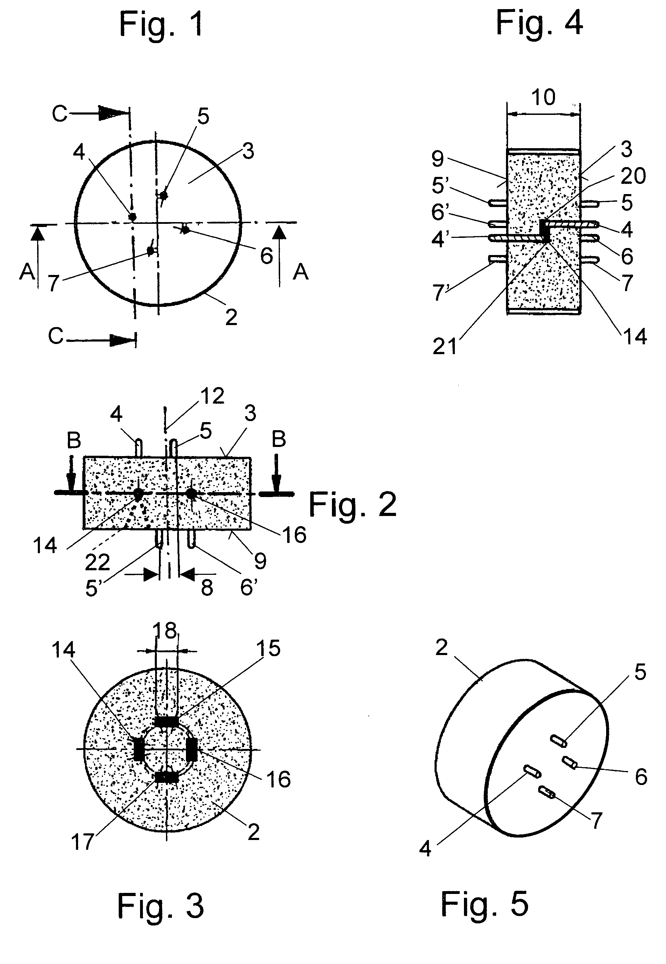

Das Keramikbauteil 2 gemäß Fig. 1 und Fig. 2, welches beispielsweise als ein Steckereinsatz und / oder eine Hochdruckdurchführung ausgebildet ist, enthält vier elektrische Leiter 4, 5, 6, 7, welche bevorzugt als Stifte ausgebildet mit einer vorgegebenen Länge über die Oberfläche 3 herausragen. Das Keramikbauteil 2 besitzt eine zweite Oberfläche 9, welche bei diesem Ausführungsbeispiel im Wesentlichen parallel zur ersten Oberfläche 3 liegt. Aus der zweiten Oberfläche 9 ragen weitere elektrische Leiter 4', 5', 6' und 7' ebenfalls mit einem vorgegebenen Abstand heraus. Gemäß Fig. 2 ist der elektrische Leiter 5 zu dem im Wesentlichen parallelen weiteren Leiter 5' in einem Abstand 8 angeordnet, wobei die im Inneren des Keramikbauteils 2 vorhandenen Verbindungsstellen der Leiter 5 und 5' ebenfalls den Abstand 8 zueinander aufweisen. Des Weiteren sind analog die Verbindungsstellen der Leiter 3, 4, 6, 7 mit den Verbinundgsstellen der jeweils zugeordneten weiteren Leitern 3', 4', 6', 7' versetzt mit vorgegebenen Abständen zueinander angeordnet, wobei diese Abstände vorteilhaft im Wesentlichen gleich groß sind wie der genannte Abstand 8.

Wie ersichtlich, ist das Keramikbauteil 2 beispielsweise im Wesentlichen zylindrisch ausgebildet mit einer Dicke 10, welche beispielsweise näherungsweise 20 mm beträgt, bezogen auf eine Längsachse 12. Alternativ kann das Keramikbauteil 2 statt einer zylindrischen Außenkontur eine polygonale Außenkontur aufweisen oder wenigstens eine flache Außenseite enthalten

Im Inneren des Keramikbauteils 2 sind vier Cermet-Körper 14, 15, 16, 17 angeordnet. Wie aus Fig. 3 ersichtlich, sind diese Cermet-Körper 14, 15, 16, 17 über den Umfang bevorzugt gleichmäßig verteilt und mittels der Keramik des Keramikbauteils 2 voneinander isoliert. Vorteilhaft befinden sich die Cermet-Körper 14,15,16,17, welche eine Länge 18 aufweisen, im Wesentlichen und / oder zumindest näherungsweise in der Mitte zwischen den Oberflächen 3, 9 des Keramikbauteils 2. Die Länge 18 stimmt zumindest näherungsweise mit dem Abstand 8 gemäß Fig. 2 überein.

Der oder die Cermet-Körper 14, 15, 16, 17 sind in wenigstens einer zur Längsachse 12 im Wesentlichen orthogonal verlaufenden Ebene angeordnet. Sind zwei oder mehr Cermet-Körper 14, 15, 16, 17 vorgesehen, so können diese gemeinsam in der gleichen zur Längsachse 12 orthogonalen Ebene oder in unterschiedlichen Ebenen angeordnet sein, welche in Richtung der Längsachse 12 axial beabstandet und / oder versetzt verlaufen. Erfindungsgemäß sind mit dem jeweiligen Cermet-Körper 14, 15, 16, 17 zur ersten Oberfläche 3 hin jeweils die ersten elektrischen Leiter 4 - 7 und zu der zweiten Oberfläche 9 hin jeweils die weiteren elektrischen Leiter 4' - 7' verbunden. Es sei hier ausdrücklich darauf hingewiesen, dass die genannten Oberflächen 3, 9, abweichend von der Zeichnung, nicht zwingend parallel zueinander und/oder eben ausgebildet sein müssen, sondern für den jeweiligen Anwendungsfall zueinander in einem vorgegebenen Winkel geneigt angeordnet sein können und/oder gebogen ausgebildet sein können. Ferner können die Cermet-Körper 14, 15, 16, 17 in der jeweiligen Ebene, anders als in Fig. 3 den Anforderungen gemäß entsprechend, beispielsweise radial, ausgerichtet sein.

Für den Fall, dass die Oberflächen 3, 9 in einem Winkel zueinander verlaufen und zwei oder mehr Cermet-Körper 14, 15, 16, 17 vorgesehen sind, können die Cermet-Körper in der einen oder anderen zur Längsachse orthogonal verlaufenden Ebene oder in orthogonalen Ebenen zu Achsen, welche zwischen den winklig zueinander verlaufenden Längsachsen liegen, angeordnet sein.

Wie aus Fig. 4 ersichtlich, sind die elektrischen Leiter 4 und 4' mittels des Cermet-Körpers 14 miteinander verbunden. In vorteilhafter Weise sind die elektrischen Leiter 4 und 4' in einem vorgegebenen Abstand versetzt zueinander und / oder entsprechend der vorgegebenen Länge 18 des Cermet-Körpers 14 miteinander verbunden. Zur Verbindung der elektrischen Leiter 4 und 4' mit dem Cermet-Körper 14 ist an Verbindungsstellen 20, 21 jeweils Verbindungsmittel vorhanden, welches insbesondere als ein elektrisch leitendes Klebemittel oder als ein Lot, insbesondere Metalllot, ausgebildet ist. Analog hierzu sind ferner die elektrischen Leiter, 5 und 5', 6 und 6' sowie 7 und 7' über die jeweiligen zugeordneten Cermet-Körper 15, 16 und 17 miteinander elektrisch verbunden.

In Fig. 2 ist eine alternative besondere Ausgestaltung der Erfindung, nämlich mit einer Messelektrode 22, mittels gestrichelter Linie angedeutet. Die Messelektrode 22 ist mit dem Cermet-Körper 14 verbunden, und zwar analog zur vorgenannten Verbindung der elektrischen Leiter. Das derart ausgebildete Keramikbauteil ist insbesondere Bestandteil eines magnetischinduktiven Durchflussmessgerätes, wobei das Keramikbauteil als ein zylindrisches Messrohr bzw. Rohrteil ausgebildet ist, durch welches ein Medium strömen kann. Anstelle der drei aus Fig. 3 ersichtlichen anderen Cermet-Körper sind bei der alternativen Ausbildung, insbesondere als Messrohr, zwei Cermet-Körper diametral in der Rohrwand und im Wesentlichen orthogonal zur Längsachse angeordnet. Die beiden Messelektroden sind zum durchströmbaren Innenraum ausgerichtet, während die mit der jeweiligen Cermet-Körper verbundenen elektrischen Leiter im Wesentlichen radial nach außen, bezogen auf die Längsachse des Rohrteils, gerichtet sind und über die Außenfläche des Rohrteils vorstehen.

Zur Herstellung des Keramikbauteils wird ein Formgebungswerkzeug zunächst teilweise, zweckmäßig im Wesentlichen zur Hälfte mit der Keramikmasse befüllt, derart, dass beispielsweise gemäß Fig. 2 unterhalb der Schnittlinie B ein erster Teil der Keramikmasse vorhanden ist. Nachfolgend werden der oder die als Grünlinge vorbereiteten Cermet-Körper eingebracht bzw. oben auf den ersten Teil der Keramikmasse gelegt. Daraufhin wird das Formgebungswerkzeug mit dem zweiten Teil der Keramikmasse gefüllt, und in einem weiteren Verfahrensschritt wird die gesamte Keramikmasse zusammen mit den nunmehr innen liegenden Cermet-Körpern verdichtet, und daraufhin wird die Sinterung durchgeführt. In vorteilhafter Weise werden insbesondere mittels des Formgebungswerkzeugs Markierungen in den Oberflächen 3 und 9 vorgesehen, welche den jeweiligen Enden und / oder den Verbindungsstellen zugeordnet sind. Nunmehr werden in das gesinterte Keramikbauteil als Löcher Bohrungen für die elektrischen Leiter 4 bis 7 sowie 4' bis 7' zweckmäßig unter Berücksichtigung der genannten Markierungen bis zu den jeweiligen und / oder vorgesehenen Verbindungsstellen der Cermet-Körper. Durch die genannten Bohrungen wird dann das Verbindungsmittel zu den Verbindungsstellen bzw. den Cermet-Körpern eingebracht, und schließlich werden die elektrischen Leiter 4 bis 7 sowie 4' bis 7' in die Bohrungen eingesetzt, bis ihre inneren Enden sich an den Verbindungsstellen und / oder dem elektrischen Verbindungsmittel befinden.

Es sei besonders darauf hingewiesen, dass die Außenkontur, welche insbesondere zylindrisch ausgebildet ist, und der Innendurchmesser der genannten Bohrungen derart aufeinander abgestimmt sind, dass zumindest durch Schiebesitz, vorteilhaft durch einen leichten Presssitz, bereits eine gute Verankerung und Festlegung der elektrischen Leiter im Keramikbauteil erreicht wird. Zusätzlich oder alternativ kann zur Festlegung des oder der elektrischen Leiter und ggf. der erläuterten Messelektrode geeignetes Verbindungsmittel, wie beispielsweise Klebstoff vorgesehen werden.

### Bezugszeichen

- 2: Keramikbauteil
- 3: erste Oberfläche
- 4 bis 7: erste elektrische Leiter
- 4' bis 7': weitere elektrische Leiter
- 8: Abstand
- 9: zweite Oberfläche
- 10: Dicke von 2
- 12: Längsachse von 2
- 14 bis 17: Cermet-Körper
- 18: Länge von 14 bis 17
- 20, 21: Verbindungsstelle
- 22: Messelektrode

## Patentansprüche

1. Keramikbauteil (2) mit einem Cermet-Körper (14 bis 17), wobei das Keramikbauteil (2) eine erste Oberfläche (3) und von dieser beabstandet eine zweite Oberfläche (9) aufweist und wobei der Cermet-Körper (14 bis 17) zwischen den Oberflächen (3, 9) angeordnet und vom Keramikbauteil (2) umgeben ist, wobei der Cermet-Körper (14 bis 17) im Inneren des Keramikbauteils (2) mit einem elektrischen Leiter (4 bis 7) an einer Verbindungsstelle (20) verbunden ist und im Bereich der Verbindungsstelle der Cermet-Körper (14 bis 17) vom Keramikbauteil (2) umgeben ist und wobei der als Stift ausgebildete elektrische Leiter (4 bis 7) von der Verbindungsstelle (20) durch das Keramikbauteil (2) hindurch bis zu dessen erster Oberfläche (3) nach außen geführt ist,
**dadurch gekennzeichnet, dass** der Cermet-Körper (14 bis 17) in der Mitte zwischen den beabstandet zueinander vorhandenen Oberflächen (3, 9) in einer Ebene angeordnet und an allen Seiten vollständig von der Keramik des Keramikbauteils (2) umgeben ist,
dass in einem vorgegebenen Abstand zur ersten Verbindungsstelle (20) des Cermet-Körpers (14 bis 17) eine Verbindungsstelle (21) eines weiteren als Stift ausgebildeten elektrischen Leiters (4' bis 7') angeordnet ist
und dass der weitere elektrische Leiter (4' bis 7') des Cermet-Körpers (14 bis 17) durch das Keramikbauteil (2) hindurch zur zweiten Oberfläche (9) nach außen geführt ist.

2. Keramikbauteil nach Anspruch 1, **dadurch gekennzeichnet, dass** die elektrischen Leiter (4 bis 7,4' bis 7') im Bereich zwischen den Verbindungsstellen (20, 21) bis zur Oberfläche (3, 9) von der Keramik des Keramikbauteils (2) umgeben sind und / oder dass die Keramik dicht an den elektrischen Leitern (4 bis 7, 4' bis 7') anliegt.

3. Keramikbauteil nach Anspruch 1 oder 2, **dadurch gekennzeichnet, dass** die Verbindungsstellen (20, 21) durch ein elektrisch leitendes Verbindungsmittel, insbesondere Klebemittel oder Lot, gebildet sind.

4. Keramikbauteil nach einem der Ansprüche 1 bis 3, **dadurch gekennzeichnet, dass** der oder die Cermet-Körper (14 bis 17) in der wenigstens einen Ebene, welche bevorzugt orthogonal zu einer Längsachse (12) des Keramikbauteils (2) verläuft, angeordnet sind.

5. Verfahren zur Herstellung eines Keramikbauteils nach einem der Ansprüche 1 bis 10, **dadurch gekennzeichnet, dass** der als Grünling bereitgestellte Cermet-Körper (14 bis 17) zunächst mit dem oder den elektrischen Leitern (4 bis 7,4' bis 7') verbunden wird und daraufhin in einem Formgebungswerkzeug von der Keramikmasse umgeben wird und dass schließlich in einem letzten Verfahrensschritt die Sinterung durchgeführt wird, wobei der oder die elektrischen Leiter (4 bis 7, 4' bis 7') aus einem Werkstoff bestehen, welcher bei der Sinterung bevorzugt nicht oder nur in einem geringen Maße oxidiert, oder aber die Sinterung unter Einsatz von Schutzgas durchgeführt wird und wobei ein Verbindungsmittel zur Verwendung kommt, welches der Sintertemperatur standhält.

6. Keramikbauteil nach einem der Ansprüche 1 bis 5, **dadurch gekennzeichnet, dass** der genannte Abstand der Verbindungsstellen (20,21) der Länge (18) des jeweiligen Cermet-Körpers (14 bis 17) entspricht.

7. Keramikbauteil nach einem der Ansprüche 1 bis 5, **dadurch gekennzeichnet, dass** der genannte Abstand der Verbindungsstellen (20, 21) der Dicke (10) des Keramikbauteils (2) entspricht.

8. Keramikbauteil nach einem der Ansprüche 1 bis 7, **dadurch gekennzeichnet, dass** der erste elektrische Leiter (4 bis 7), welcher im Inneren des Keramikbauteils (2) mit dem Cermet-Körper (14 bis 17) verbunden ist, über die erste Oberfläche (3) mit einer vorgegebenen Länge herausragt, und / oder dass der weitere elektrische Leiter (4' bis 7'), welcher mit dem genannten zugeordneten Cermet-Körper (14 bis 17) verbunden ist, über die zweite Oberfläche (9) des Keramikbauteils (2) mit vorgegebener Länge herausragt.

9. Keramikbauteil nach einem der Ansprüche 1 bis 8, **dadurch gekennzeichnet, dass** wenigstens ein elektrischer Leiter als eine Elektrode, insbesondere Messelektrode (22) ausgebildet ist.

10. Verfahren zur Herstellung eines Keramikbauteils (2) nach einem der Ansprüche 1 bis 9, **dadurch gekennzeichnet, dass** nach dem Einbetten des Cermet-Körpers (14 bis 17) in das Keramikbauteil und der Sinterung für den elektrischen Leiter (4 bis 7, 4' bis 7') eine Bohrung bis zu dem Cermet-Körper (14 bis 17) und / oder der vorgesehenen Verbindungsstelle (20, 21) eingebracht wird, dass nachfolgend das elektrisch leitende Verbindungsmittel in die Bohrung und / oder bis zum Cermet-Körper (14 bis 17) eingebracht wird, und dass schließlich in die Bohrung der elektrische Leiter (4 bis 7,4' bis 7'), bis zur Verbindungsstelle (20, 21) und / oder dem jeweiligen Cermet-Körper (14, 17) eingesetzt wird.

11. Verfahren zur Herstellung eines Keramikbauteils (2) nach einem der Ansprüche 1 bis 10, **dadurch gekennzeichnet, dass** der als Grünling bereitgestellte Cermet-Körper (14 bis 17) zunächst mit dem oder den elektrischen Leitern (4 bis 7, 4' bis 7') verbunden wird und daraufhin in einem Formgebungswerkzeug von der Keramikmasse umgeben wird und dass schließlich in einem letzten Verfahrensschritt die Sinterung durchgeführt wird, wobei der oder die elektrischen Leiter (4 bis 7, 4' bis 7') aus einem Werkstoff bestehen, welcher bei der Sinterung bevorzugt nicht oder nur in einem geringen Maße oxidiert, oder aber die Sinterung unter Einsatz von Schutzgas durchgeführt wird und wobei ein Verbindungsmittel zur Verwendung kommt, welches der Sintertemperatur standhält.

## Claims

1. A ceramic component (2) having a cermet body (14 to 17), wherein the ceramic component (2) has a first surface (3) and a second surface (9) which is at a distance from said first surface, and wherein the cermet body (14 to 17) is disposed between the surfaces (3, 9) and is surrounded by the ceramic component (2), wherein the cermet body (14 to 17) is connected to an electrical conductor (4 to 7) at a connection point (20) in the interior of the ceramic component (2), and the cermet body (14 to 17) is surrounded by the ceramic component (2) in the region of the connection point, and wherein the electrical conductor (4 to 7), which is in the form of a pin, is directed outwardly from the connection point (20) through the ceramic component (2) to the first surface (3) thereof,
**characterized in that** the cermet body (14 to 17) is disposed in the centre between the mutually separated surfaces (3, 9) in a plane and is completely surrounded on all sides by the ceramic of the ceramic component (2),
**in that** a connection point (21) of a further electrical conductor (4' to 7') which is in the form of a pin is disposed at a predetermined distance from the first connection point (20) of the cermet body (14 to 17),
and **in that** the further electrical conductor (4' to 7') of the cermet body (14 to 17) is directed outwardly through the ceramic component (2) to the second surface (9).

2. The ceramic component as claimed in claim 1, **characterized in that** the electrical conductors (4 to 7, 4' to 7') are surrounded by the ceramic of the ceramic component (2) in the region between the connection points (20, 21) as far as the surface (3, 9) and/or **in that** the ceramic lies close to the electrical conductors (4 to 7, 4' to 7').

3. The ceramic component as claimed in claim 1 or claim 2, **characterized in that** the connection points (20, 21) are formed by an electrically conductive connecting means, in particular adhesive or solder.

4. The ceramic component as claimed in one of claims 1 to 3, **characterized in that** the cermet body or bodies (14 to 17) are disposed in the at least one plane which is preferably orthogonal to a longitudinal axis (12) of the ceramic component (2).

5. A method for the production of a ceramic component as claimed in one of claims 1 to 10, **characterized in that** the cermet body (14 to 17) which has been prepared in the form of a green body is initially connected to the electrical conductor or conductors (4 to 7, 4' to 7') and thereafter is surrounded by the ceramic mass in a shaping tool and **in that** finally, sintering is carried out in a final step of the method, wherein the electrical conductor or conductors (4 to 7, 4' to 7') consist or consists of a material which preferably does not oxidize or only oxidizes to a small extent during sintering, or alternatively sintering is carried out using a protective gas and wherein a connecting means is employed which can withstand the sintering temperature.

6. The ceramic component as claimed in one of claims 1 to 5, **characterized in that** said distance between the connection points (20, 21) corresponds to the length (18) of the respective cermet body (14 to 17).

7. The ceramic component as claimed in one of claims 1 to 5, **characterized in that** said distance between the connection points (20, 21) corresponds to the thickness (10) of the ceramic component (2).

8. The ceramic component as claimed in one of claims 1 to 7, **characterized in that** the first electrical conductor (4 to 7) which is connected to the cermet body (14 to 17) in the interior of the ceramic component (2) protrudes out of the first surface (3) by a predetermined length, and/or **in that** the further electrical conductor (4' to 7'), which is connected to said associated cermet body (14 to 17), protrudes out of the second surface (9) of the ceramic component (2) by a predetermined length.

9. The ceramic component as claimed in one of claims 1 to 8, **characterized in that** at least one electrical conductor is configured as an electrode, in particular a measuring electrode (22).

10. A method for the production of a ceramic component as claimed in one of claims 1 to 9, **characterized in that** after embedding the cermet body (14 to 17) in the ceramic component and sintering, a hole is generated as far as the cermet body (14 to 17) and/or the connection point (20, 21) which has been provided, **in that** subsequently, the electrically conductive connecting means is introduced into the hole and/or as far as the cermet body (14 to 17), and **in that** finally, the electrical conductor (4 to 7, 4' to 7') is inserted as far as the connection point (20, 21) and/or the respective cermet body (14, 17).

11. A method for the production of a ceramic component as claimed in one of claims 1 to 10, **characterized in that** the cermet body (14 to 17) which has been prepared in the form of a green body is initially connected to the electrical conductor or conductors (4 to 7, 4' to 7') and thereafter is surrounded by the ceramic mass in a shaping tool and **in that** finally, sintering is carried out in a final step of the method, wherein the electrical conductor or conductors (4 to 7, 4' to 7') consist or consists of a material which preferably does not oxidize or only oxidizes to a small extent during sintering, or alternatively sintering is carried out using a protective gas and wherein a connecting means is employed which can withstand the sintering temperature.

## Revendications

1. Élément en céramique (2) pourvu d'un corps en Cermet (14 à 17), l'élément en céramique (2) présentant une première surface (3) et une seconde surface (9) espacée de celle-ci et le corps en Cermet (14 à 17) étant disposé entre les surfaces (3, 9) et entouré par l'élément en céramique (2), le corps en Cermet (14 à 17) étant relié à l'intérieur de l'élément en céramique (2) à un conducteur électrique (4 à 7) au niveau d'un point de liaison (20) et entouré au niveau du point de liaison du corps en Cermet (14 à 17) par l'élément en céramique (2) et le conducteur électrique se présentant sous forme d'une tige (4 à 7) étant guidé depuis le point de liaison (20) à travers l'élément en céramique (2) jusqu'à sa première surface (3) vers l'extérieur,
**caractérisé en ce que** le corps en Cermet (14 à 17) est disposé au milieu entre les surfaces existantes espacées les unes des autres (3, 9) dans un plan et étant entouré sur toutes ses faces entièrement par la céramique de l'élément en céramique (2),
que, à une distance prédéfinie du premier point de liaison (20) du corps en Cermet (14 à 17), est disposé un point de liaison (21) d'un autre conducteur électrique (4' à 7') se présentant sous forme d'une tige
et que l'autre conducteur électrique (4' à 7') du corps en Cermet (14 à 17) est guidé à travers l'élément en céramique (2) vers la seconde surface (9) vers l'extérieur.

2. Élément en céramique selon la revendication 1, **caractérisé en ce que** les conducteurs électriques (4 à 7, 4' à 7') sont entourés, dans la zone située entre les points de liaison (20, 21) jusqu'à la surface (3, 9), par la céramique de l'élément en céramique (2) et/ou que la céramique épouse étroitement les conducteurs électriques (4 à 7, 4' à 7').

3. Élément en céramique selon la revendication 1 ou 2, **caractérisé en ce que** les points de liaison (20, 21) sont constitués par un moyen de liaison conducteur électrique, en particulier de la colle ou une soudure.

4. Élément en céramique selon une des revendications 1 à 3, **caractérisé en ce que** le ou les corps en Cermet (14 à 17) sont disposés dans l'au moins un plan qui s'étend de préférence orthogonalement à un axe longitudinal (12) de l'élément en céramique (2).

5. Procédé de fabrication d'un élément en céramique selon une des revendication1 à 10, **caractérisé en ce que** le corps en Cermet apporté sous forme d'un comprimé cru (14 à 17) est d'abord relié au(x) conducteur(s) électrique (s) (4 à 7, 4' à 7') puis est entouré dans un outil de moulage par la masse de céramique et qu'ensuite, dans une dernière étape opératoire, le frittage est réalisé, le ou les conducteurs électriques (4 à 7, 4' à 7') étant composés d'un matériau qui ne s'oxyde pas ou alors seulement dans une faible mesure lors du frittage ou que le frittage est réalisé en utilisant du gaz protecteur, sachant qu'on utilise un moyen de liaison qui résiste à la température de frittage.

6. Élément en céramique selon une des revendications 1 à 5, **caractérisé en ce que** l'espacement indiqué des points de liaison (20, 21) coïncide avec la longueur (18) du corps en Cermet respectif (14 à 17).

7. Élément en céramique selon une des revendications 1 à 5, **caractérisé en ce que** l'espacement indiqué des points de liaison (20, 21) coïncide avec l'épaisseur (10) de l'élément en céramique (2).

8. Élément en céramique selon une des revendications 1 à 7, **caractérisé en ce que** le premier conducteur électrique (4 à 7) qui est relié à l'intérieur de l'élément en céramique (2) au corps en Cermet (14 à 17) dépasse de la première surface (3) d'une longueur prédéfinie et/ou que l'autre conducteur électrique (4' à 7') qui est relié au corps en Cermet associé indiqué (14 à 17) dépasse de la seconde surface (9) de l'élément en céramique (2) d'une longueur prédéfinie.

9. Élément en céramique selon une des revendications 1 à 8, **caractérisé en ce qu'**au moins un conducteur électrique se présente sous forme d'une électrode, en particulier une électrode de mesure (22).

10. Procédé de fabrication d'un élément en céramique (2) selon une des revendications 1 à 9, **caractérisé en ce que**, après l'encastrement du corps en Cermet (14 à 17) dans l'élément en céramique et le frittage, un alésage est pratiqué pour le conducteur électrique (4 à 7, 4' à 7') jusqu'au corps en Cermet (14 à 17) et/ou jusqu'au point de liaison prévu (20, 21), qu'ensuite le moyen de liaison conducteur électrique est rentré dans l'alésage et/ou jusqu'au corps en Cermet (14 à 17) et qu'enfin le conducteur électrique (4 à 7, 4' à 7'), est inséré dans l'alésage jusqu'au point de liaison (20, 21) et/ou jusqu'au corps en Cermet respectif (14, 17).

11. Procédé de fabrication d'un élément en céramique (2) selon une des revendications 1 à 10, **caractérisé en ce que** le corps en Cermet est apporté sous forme d'un comprimé cru (14 à 17) et d'abord relié au conducteur électrique (4 à 7, 4' à 7') puis entouré dans un outil de moulage par la masse de céramique et qu'enfin, dans une dernière étape opératoire, le frittage est réalisé, le ou les conducteurs électriques (4 à 7, 4' à 7') étant composés d'un matériau qui de préférence ne s'oxyde pas ou alors seulement dans une faible mesure lors du frittage ou que le frittage est réalisé en utilisant du gaz protecteur, sachant qu'on utilise un moyen de liaison qui résiste à la température de frittage.
